Europäisches Patentamt

European Patent Office

Office européen des brevets

(11) Veröffentlichungsnummer: 0 378 142
A2

# EUROPÄISCHE PATENTANMELDUNG

(21) Anmeldenummer: 90100292.3

(22) Anmeldetag: 08.01.90

(51) Int. Cl.5: G01C 15/00

(30) Priorität: 10.01.89 CS 169/89

(43) Veröffentlichungstag der Anmeldung:
18.07.90 Patentblatt 90/29

(84) Benannte Vertragsstaaten:
CH DE FR GB LI SE

(71) Anmelder: PRVNI BRNENSKA STROJIRNA
KONCERNOVY PODNIK
Olomoucka 7/9
Brno(CS)

(72) Erfinder: Fiala, Stanislav, Dipl.-Ing.
Babickova 40
Brno(CS)
Erfinder: Bocek, Vlastislav
Uvoz 116
Brno(CS)

(74) Vertreter: Patentanwälte Beetz sen. - Beetz
jun. Timpe - Siegfried - Schmitt-Fumian-
Mayr
Steinsdorfstrasse 10
D-8000 München 22(DE)

(54) Laserpeilgerät.

(57) Gegenstand der Erfindung ist ein Laserpeilgerät, bei dem das Laserrohr 3 in einem Körper (1) und das Objektiv in einem Träger (13) jeweils einstellbar angeordnet sind. Ein Instrumentenkegel (14) ist zu einer Zylinderfläche (110) des Körpers (1) und einer Führungsfläche (130) des Objektivträgers (13) gleichachsig. Am Körper (1) sind Seitenwände (4) und (5) befestigt und durch den Verbindungsteil (6) verbunden. Das Laserrohr (3) und das Objektiv (15, 16) sind verstellbar eingebettet und die mechanische und optische Achse des Peilgerätes können aufeinander abgestimmt werden.

FIG.1

# Laserpeilgerät

Die Erfindung betrifft ein Laserpeilgerät mit einem Grundkörper, in dessen Hohlraum ein Laserrohr angeordnet und an dem ein unabhängig verstellbares Objektiv angebracht ist.

Es sind verschiedene Laserpeilgeräte bekannt, die zur Peilung, zur Absteckung von Richtungen und dgl. verwendet werden. Die Geräte sind verhältnismäßig robust und bestehen aus einem selbständigen Körper mit dem Laserrohr und einem optischen System zur Fokussierung des Strahlenbündels. Die Geräte werden auf tragbaren Stativen oder anderen speziellen Tragkonstruktionen angebracht, wobei der Stromerzeuger in einem separaten Kasten untergebracht ist und die elektrischen Verbindungen als freie Kabel ausgeführt sind. Wenn die optischen und elektrischen Teile in einem gemeinsamen Gehäuse angeordnet sind, ist die gesamte Konstruktion umfangreich und schwer. Für verschiedene praktische Anwendungsfälle sind derartig große Peilgeräte nicht geeignet. Dies gilt z. B. bei der Bestimmung und Vorgabe der Lage und Richtung der Spindelachse einer Bearbeitungsmaschine, z. B. Bohrmaschine für größere Werkstükke.

Aufgabe der Erfindung ist es, ein Laserpeilgerät zur Bestimmung der optischen Achse einer Anlage zu schaffen, das bei geringen Abmessungen und kleinem Gewicht eine genaue Achszentrierung seiner Bauteile auf einfache Weise ermöglicht.

Diese Aufgabe wird durch die Merkmale des Patentanspruchs 1 gelöst.

Bei dem erfindungsgemäßen Laserpeilgerät wird das optische Glied durch einen Peilerkörper gebildet, in dessen Hohlraum winkel- und radialverstellbar ein Laserrohr und unabhängig von diesem ein achsen-, radial- und winkelverstellbares Objektiv gelagert sind, wobei der Körper mit Elementen für definierte Einbettung des Laserpeilgerätes versehen ist. Der Kern der Erfindung besteht darin, daß die Elemente für die definierte Einbettung des Laserpeilers, die an der Seite seines Körpers vom optischen Glied abgewendet sind, durch ein System von Führungs-Zylinder-Belegung und konzentrischer Führungs-Zylinderöffnung und an der anderen Seite des optischen Glieds durch eine Führungs-Zylinderfläche gebildet werden.

Weiterhin ist wesentlich, daß die zylindrische Führungsöffnung zur Aufnahme der zylindrischen Spur des Instrumentenkegels aufbereitet ist. Ihre äußere Zylinderoberfläche ist gleichachsig mit der Funktionsfläche des Instrumentenkegels.

Schließlich gehört zum Wesen der Erfindung, daß das Laserpeilgerät durch ein Paar von Seitenwänden, der linken und der rechten, gebildet wird, die zur Einlegung der elektrischen und elektronischen Elemente zum Löten des Laserrohres zubereitet sind und an zwei gegenüberliegende Körperseiten des Peilgerätes angeschlossen werden, wobei die linke und rechte Seitenwand auf einer der bestehenden freien Seiten des Körpers durch einen Verbindungsteil verbunden sind, der als Handgriff gestaltet ist.

Der Erfindungsgegenstand hat relativ kleine Abmessungen und einen festgefügten Aufbau bei kleinem Gewicht. Daneben sind ausreichende Führungsflächen für die mechanische Abstimmung der Laserstrahlachse mit der mechanischen Achse des Gerätes vorgesehen. Mittels des Instrumentenkegels kann das ganze Lasergerät einfach auf der Planplatte der Ausbohrköpfe oder in den Hohlraum einer Maschinenspindel gelagert und zentriert werden. Gleichzeitig ist es möglich das Peilgerät nach der Erfindung operativ hinter der vorderen Zylinderfläche einzubetten, ohne daß die Position des Laserstrahles in bezug auf die Achse des Instrumentenkegels verändert wird.

Weitere Besonderheiten und Vorzüge sind bei dem im folgenden ausführlich anhand der Zeichnung beschriebenen Ausführungsbeispiels verwirklicht. Es zeigen:

Fig. 1 ein Laserpeilgerät im Axialschnitt;

Fig. 2 das Peilgerät nach Fig. 1 im Querschnitt A-A.

Das Laserpeilgerät besteht aus einem Grundkörper 1, von quadratischem Querschnitt, in dessen Hohlraum 10 ein Laserrohr 3 in einem Gehäuse 2 angeordnet ist.

Das Laserrohr 3 ist durch Ringbunde 20 im rohrförmigen Gehäuse 2 fixiert, das durch eine hintere Endplatte 21 und eine vordere Endplatte 22 mit einer Öffnung 220 abgeschlossen ist. Das Gehäuse 2 kann im Grundkörper 1 mit Hilfe von mehreren winkelversetzten Stellschrauben 12 ausgerichtet und verstellt werden. Am hinteren Ende des Grundkörpers 1 ist ein Bund 11 mit einer äußeren Zylinderfläche 110 und einer koaxialen inneren Zylinderfläche 111 angeformt. Auf die äußere Zylinderfläche 110 des Bundes 11 ist eine Überwurfmutter 144 aufgeschraubt. Der Gewindeteil des Bundes ist größer als der Durchmesser der äußeren Zylinderfläche 110. Mit Hilfe der inneren Zylinderfläche 111 ist im Bund 11 ein hohler Instrumentenkegel 14 festgelegt, dessen äußere Mantelfläche 140 auf die Achse einer zylindrischen Führungsfläche 142 am eingesteckten Ende zentriert ist. Der Instrumentenkegel 14 ist im Grundkörper 1 durch eine Schraube 143 eingespannt.

An den Vorderteil des Grundkörpers 1 ist ein Objektivträger 13 angeschlossen, dessen zylindrische Außenfläche 130 gleichachsig zur Achse der äußeren Zylinderfläche 110 des Bundes 11 und der inneren Zylinderfläche 111 ist. Im Objektivträger 13 ist eine Hülse 150 des hinteren Objektivglieds 15 angeordnet und durch winkelversetzte Stellschrauben 151 zentrierbar. In die Hülse 150 ist eine weitere Hülse 160 des vorderen Objektivglieds 16 eingeschraubt.

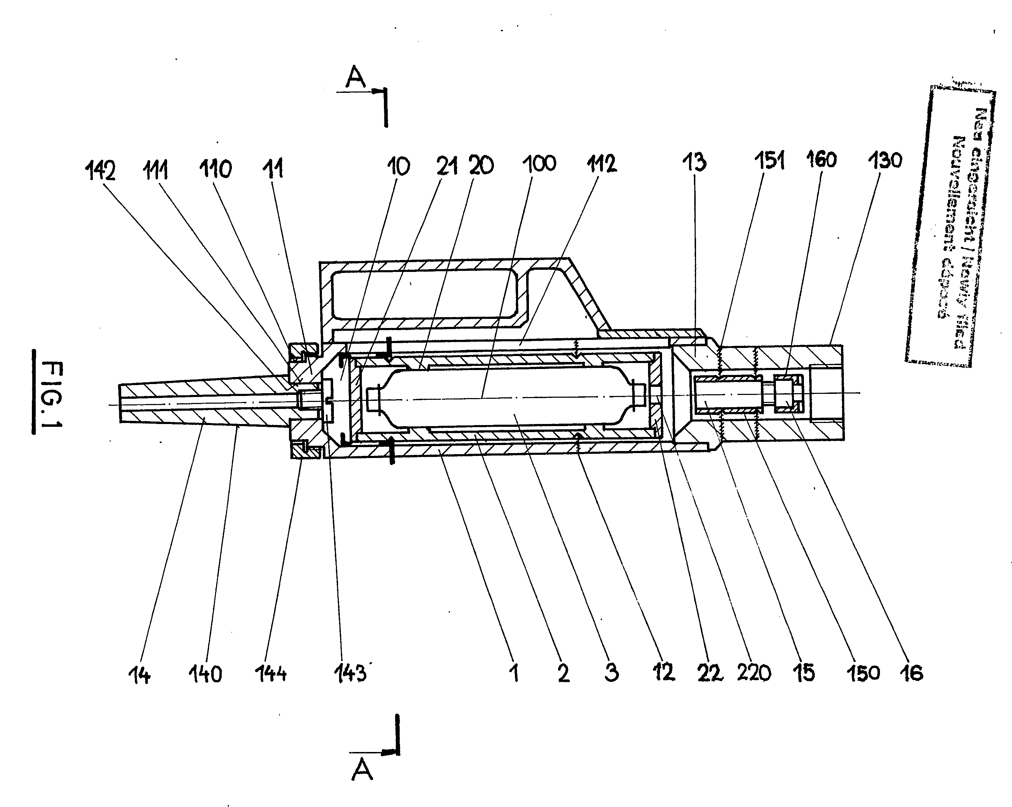

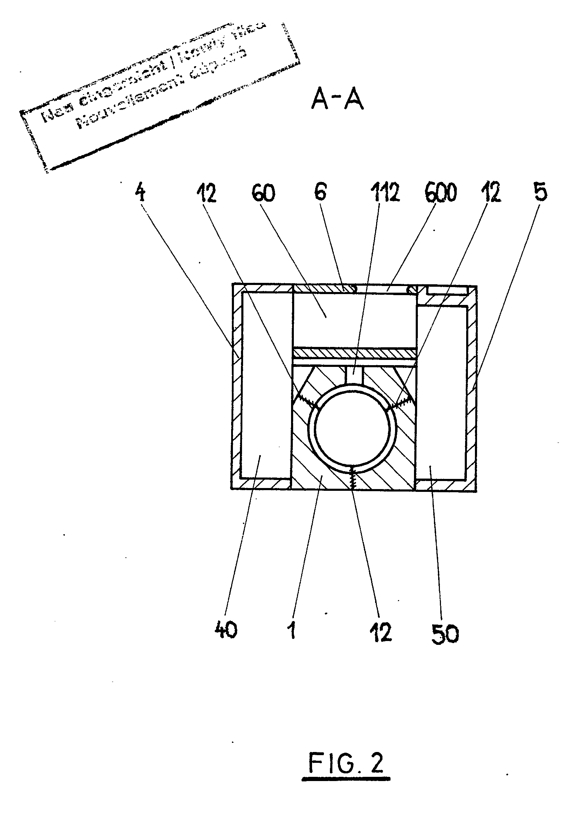

Wie aus Fig. 2 ersichtlich, ist der Querschnitt des Grundkörpers 1 quadratisch. Am Grundkörper 1 sind eine linke Seitenwand 4 mit einem Hohlraum 40 und eine rechte Seitenwand 5 mit einem Hohlraum 50 befestigt. Die kastenförmigen Seitenwände 4, 5 überragen die obere Seite des Grundkörpers 1 und sind durch einen doppelwandigen Mittelteil 6 mit einem Hohlraum 60 miteinander verbunden. Im Mittelteil sind längsverlaufende Aussparungen 600 ausgebildet. Wie aus Fig. 1 und 2 ersichtlich, ist im oberen Teil des Körpers 1 eine längliche Aussparung 112 vorgesehen.

In der Zeichnung sind einige Details der Verbindung einzelner Teile und auch einige unwesentliche Bestandteile des Laserpeilgerätes, wie zum Beispiel die Ausgangsblende, nicht dargestellt.

Die elektrische Ausstattung des Laserpeilgerätes ist in den von den Seitenwänden 4 und 5 begrenzten Hohlräumen 40 und 50 eingebaut. So kann z. B. im Hohlraum 40 der linken Seitenwand 4 die Hochspannungsquelle für den Laserbetrieb und im Hohlraum 50 der rechten Seitenwand 5 die elektrische Steuerung mit Anschlußelementen untergebracht sein. Ein Teil des Hohlraumes 60 des Mittelteiles 6 zusammen mit der Aussparung 600 bilden einen Handgriff des Peilgerätes.

Die Einstellung des Laserpeilers wird vorgenommen, indem die Achse 100 des Laserkörpers 1 mit dem vom Laserrohr 3 erzeugten Laserstrahl abgestimmt wird. Zur Abstimmung wird eine der zueinander gleichachsigen Zylinderflächen, z. B. die äußere Zylinderfläche 110 des Bundes 11 bzw. die Führungsfläche 130 des Objektivträgers 13 verwendet. Danach wird durch Verschieben des vorderen Objektivglieds 16 gegenüber dem hinteren Objektivglied 15 durch Einschrauben der Hülse 160 die Scharfeinstellung vorgenommen.

Das aus den Gliedern 15 und 16 gebildete Objektiv wird in den Objektivträger 13 eingesetzt und durch Verstellen der gegenseitigen Position der Objektivglieder 15 und 16 sowie durch Ausrichten der Hülsenlage 150 der Objektive mittels der radialen Stellschrauben 151 genau justiert.

Das Laserpeilgerät nach der Erfindung kann mit Vorteil zum Festlegen bzw. Abstecken der Achsen im Bearbeitungsbereich von Turbinengehäusen, Getriebegehäusen und anderen großen und schweren Werkstücken eingesetzt werden. Weitere Anwendungsgebiete sind die Vermessung und Kontrolle geometrischer Größen z. B. bei Bearbeitungsmaschinen, großen Erzeugnissen und Industrieanlagen.

## Ansprüche

1. Laserpeilgerät mit einem Grundkörper, in dessen Hohlraum ein winkel- und radial verstellbares Laserrohr und ein unabhängig von diesem radial und winkelverschiebbares Objektiv angeordnet sind, und mit Elementen für die definierte Positionierung des Grundkörpers,
**dadurch gekennzeichnet,**
daß dem vom Objektiv (15, 16) abgewandten Ende des Grundkörpers (1) eine zylindrische Führungsfläche (110) und eine zu dieser konzentrische zylindrische Führungsöffnung (111), sowie an der Außenseite eines Objektivträgers (13) eine zylindrische Führungsfläche (130) ausgebildet sind, welche Bezugselemente zur Ausrichtung des Grundkörpers (1) bilden.

2. Laserpeilgerät nach Anspruch 1,
**dadurch gekennzeichnet,**
daß in die Führungsöffnung (111) ein Zylinderschaft (142) eines Instrumentenkegels (14) einsetzbar ist, wobei die zylindrische Außenfläche des Schafts (142) gleichachsig zur konischen Mantelfläche (140) des Instrumentenkegels (14) ausgerichtet ist.

3. Laserpeilgerät nach Anspruch 1 oder 2,
**dadurch gekennzeichnet,**
daß am Grundkörper 1 Seitenwände (4, 5) unter Ausbildung von Hohlräumen (40, 50) befestigt sind, in denen die elektrischen und elektronischen Elemente des Laserrohres angeordnet sind.

4. Laserpeilgerät nach Anspruch 3,
**dadurch gekennzeichnet,**
daß in einem zwischen den Seitenwänden (4, 5) angeordneten Mittelteil (6) ein Handgriff (60) ausgebildet ist.

5. Laserpeilgerät nach Anspruch 1 bis 4,
**dadurch gekennzeichnet,**
daß das Laserrohr (3) in einem hohlzylindrischen Gehäuse (2) mit einer Öffnung (220) in einer Endplatte (22) festgelegt ist, dessen Lage im Hohlraum (10) des Grundkörpers (1) gegenüber der Längsachse (100) durch mehrere Gruppen von winkelversetzten Radialschrauben (12) einstellbar ist.

6. Laserpeilgerät nach Anspruch 1 bis 5,
**dadurch gekennzeichnet,**
daß in dem am vorderen Ende des Grundkörpers (1) befestigten hohlzylindrischen Objektivträger (13) das aus zwei gegeneinander verstellbaren Gliedern (15, 16) bestehende Objektiv durch Gruppen von winkelversetzten Radialschrauben (151) einstellbar angeordnet ist.

FIG.1

A-A

FIG. 2